# EUROPEAN PATENT SPECIFICATION

(11) **EP 3 957 830 B1**
(45) Date of publication and mention of the grant of the patent: **06.05.2026**
(21) Application number: 20425032.8
(22) Date of filing: 18.08.2020
(51) Int. Cl.: F01D 21/00, F01D 25/28, G01B 5/00, G01B 5/14, G01B 5/24, G01B 3/24, G01B 3/56

(54) **METHOD AND ASSEMBLY FOR MEASURING AT LEAST ONE GEOMETRICAL PARAMETER IN A BLADE ROW OR IN A VANE ROW OF A GAS TURBINE ASSEMBLY**
VERFAHREN UND ANORDNUNG ZUR MESSUNG MINDESTENS EINES GEOMETRISCHEN PARAMETERS IN EINER LAUF- ODER LEITSCHAUFELREIHE EINER GASTURBINENANORDNUNG
PROCÉDÉ ET ENSEMBLE DE MESURE D'AU MOINS UN PARAMÈTRE GÉOMÉTRIQUE DANS UNE RANGÉE D'AUBES ROTORIQUE OU STATORIQUE D'UN ENSEMBLE DE TURBINE À GAZ

(43) Date of publication of application: 23.02.2022
(73) Proprietor: ANSALDO ENERGIA S.p.A., 16152 Genova (IT)
(72) Inventor: Bianchi, Alessandro, 15061 Arquata Scrivia (AL) (IT); Tipa, Dario, 16149 Genova (IT)
(74) Representative: Studio Torta S.p.A.

(56) References cited:
- EP-A1- 3 447 254
- CN-A- 101 650 154
- US-A- 4 322 887
- US-A1- 2016 245 637
- US-A1- 2018 283 214

## Description

### TECHNICAL FIELD

The invention relates to a method and an assembly for measuring at least one geometrical parameter in a blade row or in a vane row of a gas turbine assembly. The method and the assembly according to the invention is particularly useful for measuring geometrical parameters on blade rows or on vane rows already mounted in a gas turbine assembly for power plants.

### BACKGROUND

As is known, a gas turbine assembly for power plants comprises a compressor, a combustor and a turbine.

In particular, the compressor comprises an inlet supplied with air and a plurality of rotating blades compressing the passing air. The compressed air leaving the compressor flows into a plenum, i.e. a closed volume delimited by an outer casing, and from there into the combustor.

Inside the combustor, the compressed air is mixed with at least one fuel and combusted. The resulting hot gas leaves the combustor and expands in the turbine.

In the turbine, the hot gas expansion moves rotating blades connected to a rotor, performing work.

Both the compressor and the turbine comprise a plurality of stator assemblies axially interposed between rotor assemblies.

Each rotor assembly comprises a rotor disk rotating about a main axis and a plurality of blades supported by the rotor disk and arranged so as to form a rotating blade row.

Each stator assembly comprises a plurality of stator vanes supported by a respective vane carrier and a stator ring arranged about the rotor to form a fixed vane row.

During the operation of the gas turbine assembly, it is essential to maintain the geometry of the blade rows and of the vane row as stable as possible in order to guarantee the expected calculated performance. The performance of the gas turbine assembly, in fact, is very sensible to any variation from the design point.

Therefore, during the maintenance service activities or during the assembling operations it is important to check the geometry of said blade rows and/or vane rows of the gas turbine assembly.

However, for the maintenance service activities, the turbine assembly is turned off only for a limited period that have to be as small as possible in order to limit the economic losses.

There are two kinds of inspections: minor inspections, during which the turbine assembly is stopped just for few days and the turbine assembly is not opened and major inspections, during which the turbine is opened for maintenance.

During the minor inspections, the turbine assembly is normally inspected by a human operator, highly trained, which is normally called in the field as the "fact finder".

Under these conditions, the fact finder inspects the blades and vanes. For example, to access the first stages of gas turbine, the fact finder passes through a manhole located on the combustor, while to access the other stages of gas turbine the fact finder passes through the diffuser at the outlet of the turbine.

Especially in the first case, the space available for the movements of the fact finder is very restricted.

Therefore, checking the geometrical parameter is not simple and rapid. A known method for checking geometrical parameters is disclosed, for example, in documents US 2016/245637 and US 4322887.

### SUMMARY

Hence, it is an object of the present invention to provide a method that allows the fact finder to detect and measure as more parameters as possible regarding the geometry of accessible blades and/or vanes in a simple and rapid way.

According to said object the present invention relates to a method for measuring at least one geometrical parameter in a blade row or in a vane row of a gas turbine assembly; the method comprising:
- coupling a first frame to one first blade or vane of the blade or vane row;
- coupling a second frame to one second blade or vane of the blade or vane row adjacent to the first blade or vane;
- coupling a measuring device to the first frame and to the second frame;
- measuring the geometrical parameter with the measuring device.

A further object is to provide an assembly for measuring at least one geometrical parameter in a blade row or in a vane row of a gas turbine assembly as claimed in claim 15.

### BRIEF DESCRIPTION OF THE DRAWINGS

The invention will now be described with reference to the accompanying drawings, which show a non-limiting embodiment thereof, wherein:
- figure 1 is a schematic sectional view, with parts removed for clarity, of a gas turbine assembly;
- figure 2 is a schematic top view, with parts removed for clarity, of the assembly for measuring at least one geometrical parameter in a blade row or in a vane row of a gas turbine assembly according to a first embodiment;
- figure 3 is a schematic top view, with parts removed for clarity, of the geometrical parameter measured by the assembly of figure 2;
- figure 4 is a schematic top view, with parts removed for clarity, of a first detail of the assembly of figure 2;
- figure 5 is a schematic perspective view, with parts removed for clarity, of a second detail of the assembly of figure 2;
- figure 6 is a schematic perspective view, with parts removed for clarity, of a third detail of the assembly of figure 2;
- figure 7 is a schematic perspective view, with parts removed for clarity, of a fourth detail of the assembly of figure 2;
- figure 8 is a schematic perspective view, with parts removed for clarity, of the assembly of figure 2;
- figure 9 is a schematic perspective view, with parts removed for clarity, of the assembly for measuring at least one geometrical parameter in a blade row or in a vane row of a gas turbine assembly according to a second embodiment;
- figure 10 is a schematic perspective top view, with parts removed for clarity, of a first detail of the assembly of figure 9;
- figure 11 is a schematic perspective top view, with parts removed for clarity, of a second detail of the assembly of figure 9.

### DETAILED DESCRIPTION OF EXEMPLARY EMBODIMENTS

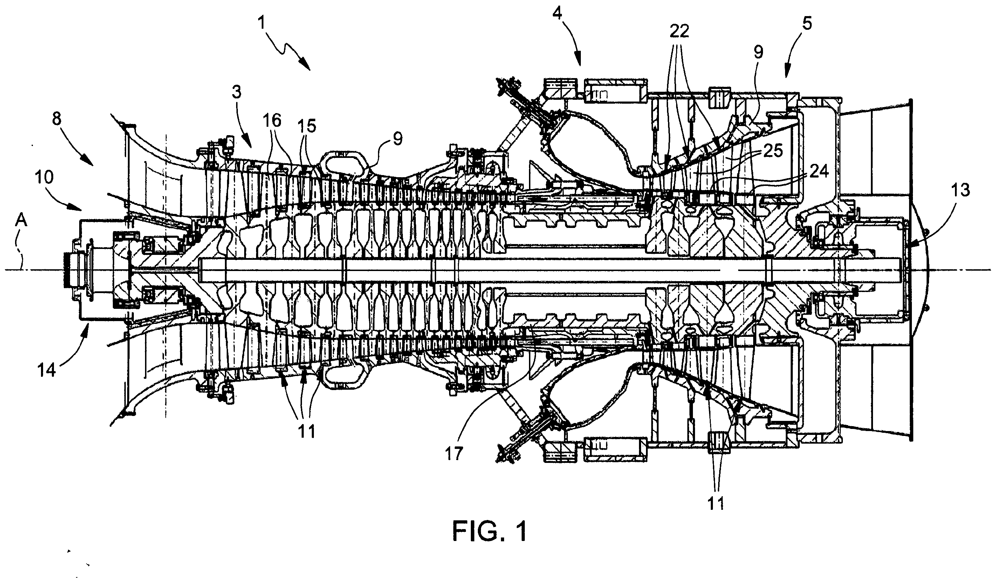

In figure 1 reference numeral 1 indicates a gas turbine assembly (schematically shown in Figure 1).

The gas turbine assembly 1 comprises a compressor 3, a combustion chamber 4, a gas turbine 5 and a generator (for simplicity, not show in the attached figures).

The compressor 3, turbine 5 and generator (not shown) are mounted on the same shaft to form a rotor 8, which is housed in stator casings 9 and extends along an axis A.

In greater detail, the rotor 8 comprises a front shaft 10, a plurality of rotor assemblies 11 and a rear shaft 13.

Each rotor assembly 11 comprises a rotor disk 15 and a plurality of rotor blades 16 coupled to the rotor disk 15 and radially arranged so as to form a rotor blade row (not visible in the attached figures).

The plurality of rotor disks 15 are arranged in succession between the front shaft 10 and the rear shaft 13 and preferably clamped as a pack by a central tie rod 14. As an alternative, the rotor disks may be welded together.

A central shaft 17 separates the rotor disks 15 of the compressor 3 from the rotor disks 15 of the turbine 5 and extends through the combustion chamber 4.

Further, stator assemblies 22 are alternated with the compressor rotor assemblies 11.

Each stator assembly 22 comprises a stator ring 24 and a plurality of stator vanes 25, which are radially arranged and coupled to the stator ring 24 and to the respective stator casing 9 so as to form a vane row 26.

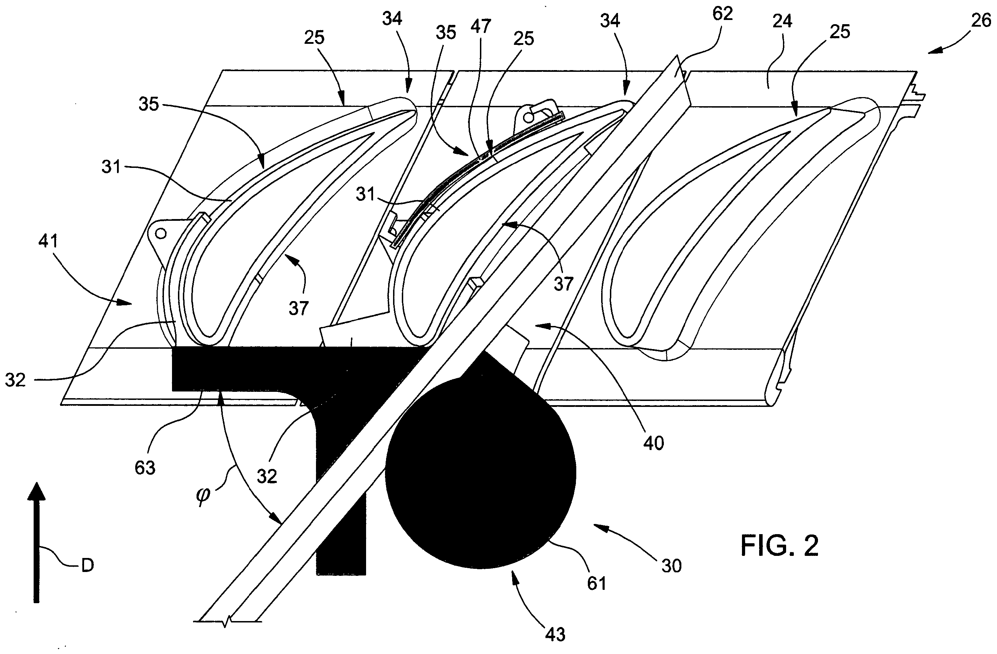

In figure 2 is shown an assembly 30 for measuring at least one geometrical parameter according to the invention. The assembly 30 is used for measuring at least one geometrical parameter in a vane row 26 (which is only partially visible). Preferably, the vane row 26 is already mounted in the gas turbine assembly 1.

In the examples here disclosed and illustrated, the method and the assembly for measuring at least one geometrical parameter according to the invention is applied on a stator vane row. However, the method and the assembly for measuring at least one geometrical parameter can be applied, mutatis mutandis, to a rotor blade row above described.

Each vane 25 is provided with an airfoil 31, which defines the aero-dynamical profile of the vane 25.

The airfoil 31 comprises a leading edge 32, a trailing edge 34, a suction side 35 and a pressure side 37.

The leading edge 32 is the foremost edge and is therefore the part, which first meets the oncoming air (schematically represented by the arrow D).

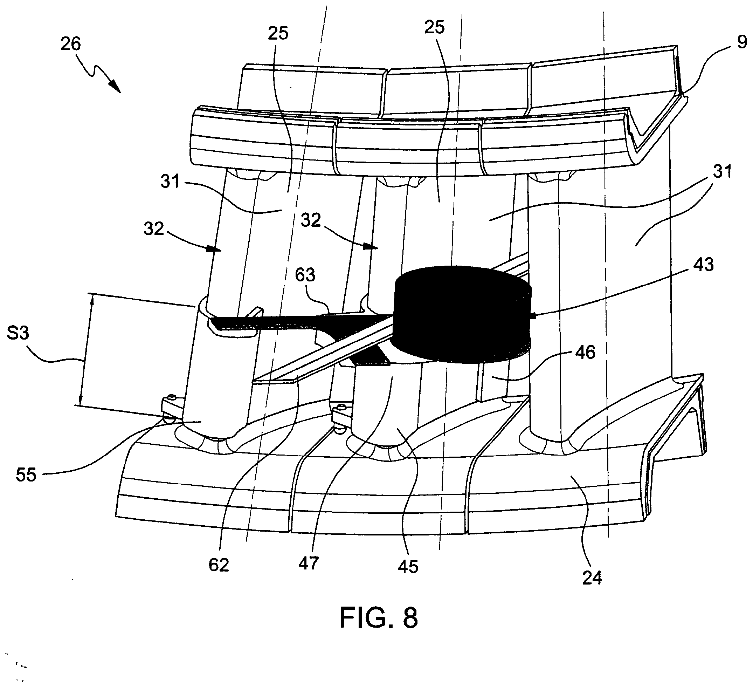

The airfoil 31 extends along a span-wise direction S (better visible in figure 8). In use, the span wise direction S coincides with a radial direction with respect to the longitudinal axis A of the gas turbine assembly 1.

The assembly 30 comprises a first frame 40 coupled to a first vane 25, a second frame 41 coupled to a second vane 25 adjacent to the first vane 25 to which the first frame 40 is coupled, and a measuring device 43 coupled to the first frame 40 and to the second frame 41.

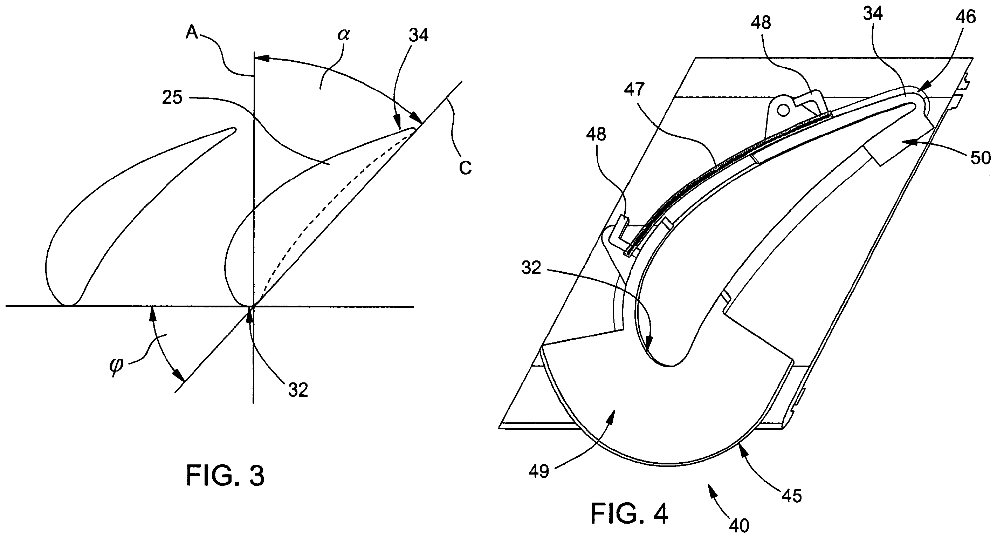

With reference to figure 4, the first frame 40 comprises a first leading edge portion 45 arranged at the leading edge 32 of the first vane 25 and a first trailing edge portion 46 arranged at the trailing edge 34 of the first vane 25. Preferably, the first leading edge portion 45 and the first trailing edge portion 46 are connected one another. In the non-limiting example here disclosed and illustrated, the first leading edge portion 45 and the first trailing edge portion 46 are coupled with an elastic ring 47 (not illustrated in figure 2), hooked to hooks 48 coupled to the first leading edge portion 45 and to the first trailing edge portion 46 respectively.

With reference to figures 4-7, the first leading edge portion 45 is a jig having an inner shape complementary to the shape of the airfoil 31 of the first vane 25 along the leading edge 32 and part of the suction side 35 and of the pressure side 37. In other words, the first leading edge portion 45 is shaped to substantially adhere to the portion of the airfoil 31 to which is coupled.

The first leading edge portion 45 has preferably a span height S1 (intended as the length along the spanwise direction S) lower than the total span height of the airfoil 31.

The first trailing edge portion 46, analogously, is a jig having an inner shape complementary to the shape of the airfoil 31 of the first vane 25 along the trailing edge 34 and part of the suction side 35 and of the pressure side 37. In other words, the first trailing edge portion 46 is shaped to substantially adhere to the portion of the airfoil 31 to which is coupled.

The first trailing edge portion 46 has preferably a span height S2 (intended as the length along the spanwise direction S) lower than the total span height of the airfoil 31.

With reference to figures 4-6, the first leading edge portion 45 comprises a first leading edge support 49 and the first trailing edge portion 46 comprising a first trailing edge support 50. In the non-limiting example here disclosed and illustrated, the first leading edge support 49 is a planar surface surrounding the leading edge 32, and the first trailing edge support 50 is a planar surface at the trailing edge 34 and extending along the pressure side 37.

Preferably, the first leading edge support 49 and the first trailing edge support 50 are arranged at a same span height of the first vane 25.

More preferably, the first leading edge support 49 and the first trailing edge support 50 are arranged, respectively, at span heights S1 and S2 of the vane 25.

Preferably, span heights S1 and S2 of the vane 25 are substantially identical.

Preferably, the first leading edge portion 45 and the first trailing edge portion 46 are respectively provided with bushes 52 configured to be engaged by respective support pins 53. The bushes 52 protrude from the respective outer surfaces of the first leading edge portion 45 and of the first trailing edge portion 46. The support pins 53, in use, engage the respective bushes 52 and rest on the stator ring 24.

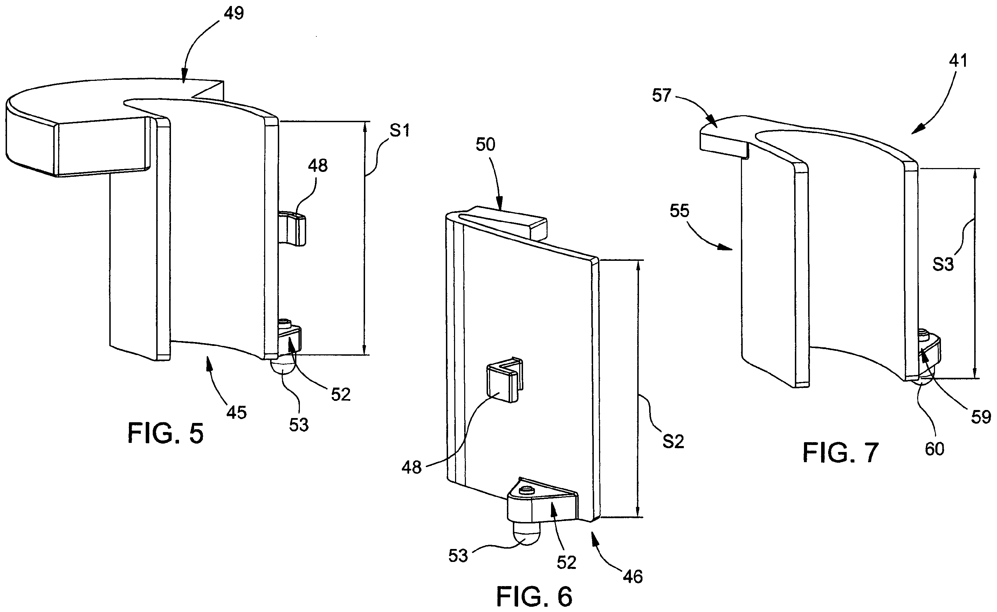

With reference to figure 7, the second frame 41 comprises a second leading edge portion 55 arranged at the leading edge 32 of the second vane 25.

The second leading edge portion 55 is a jig having an internal shape complementary to the shape of the airfoil 31 of the second vane 25 along the leading edge 32 and part of the suction side 35 and of the pressure side 37.

In other words, the second leading edge portion 55 is shaped to substantially adhere to the portion of the airfoil 31 to which is coupled.

The second leading edge portion 55 has preferably a span height S3 (intended as the length along the spanwise direction S) lower than the total span height of the airfoil 31.

The second leading edge portion 55 comprises a second leading edge support 57.

In the non-limiting example here disclosed and illustrated, the second leading edge support 57 is a planar surface surrounding the leading edge 32 of the second vane 25.

Preferably, the second leading edge support 57 is arranged at a span height such that the second leading edge support 57 and the first leading edge support 49 of the first vane 25 belong to a plane substantially orthogonal to the span-wise direction S of the first vane 25.

More preferably, the second leading edge support 57 is arranged at span height S3 of the vane 25.

Preferably, the second leading edge portion 55 is provided with a bush 59 configured to be engaged by a respective support pin 60. The bush 59 protrudes from the outer surfaces of the second leading edge portion 55. The support pin 60, in use, engages the bush 59 and rests on the stator ring 24.

The measuring device 35 is configured to detect the stagger angle α of the first vane 25.

With reference to figure 2 and figure 3, the stagger angle α is the angle defined between an axial direction (parallel to the longitudinal axis A) and the chord C of the first vane 25. The chord C is an imaginary straight line joining the leading edge 32 and the trailing edge 34 of the airfoil 31. The point on the leading edge 32 used to define the chord C may be either the surface point of minimum radius or the surface point that maximizes chord length.

The measuring device 43 comprises a goniometer 61 provided with two longitudinal arms 62 63, at least one of which is movable.

The goniometer 61 is configured to measure the angle defined between the two arms 62 63.

In the non-limitative example here disclosed and illustrated, one longitudinal arm 62 is coupled to the first leading edge support 49 and to the first trailing edge support 50 and the other arm 63 is coupled to the first leading edge support 49 and to the second leading edge support 57.

The longitudinal arm 62 is arranged in contact with the leading edge 32 and the trailing edge 34 of the first vane 25 facing the pressure side 37of the first vane. In other words, the longitudinal arm 62 is arranged so as to coincide substantially with the chord C of the first vane 25.

The other longitudinal arm 63 is arranged in contact with the leading edge 32 of the first vane and the leading edge of the second vane 25 adjacent to the first vane 25.

The goniometer 45 used in the non-limitative example here disclosed and illustrated measures the angle φ defined by the two longitudinal arms 62 63 and facing outside the vane row 26.

With reference to figure 3, the stagger angle α can be simply derived from angle φ according to the following formula: α= 90° - φ

However, a variant provides that the goniometer is configured to measure directly the stagger angle α.

With reference to figures 4-8, in use, the method according to the present invention provides to:
- couple the first leading edge portion 45 and the first trailing edge portion 46 to the first vane 25;
- couple the first leading edge portion 45 and the first trailing edge portion 46 together by the elastic ring 47;
- couple the second leading edge portion 55 to the second vane 25 adjacent to the first vane 25;
- regulate the support pins 53 60 engaging respective bushes 52 59;
- couple the measuring device 43 to the first frame 40 and to the second frame 41 preferably in such a way that one arm 62 of the measuring device 43 is arranged along the chord C of the first vane 25 and the other arm 63 the measuring device 43 is arranged in contact with the leading edge 32 of the first vane 25 and the leading edge 32 of the second vane 25 adjacent to the first vane 25;
- measure the stagger angle α by means of the measuring device 43.

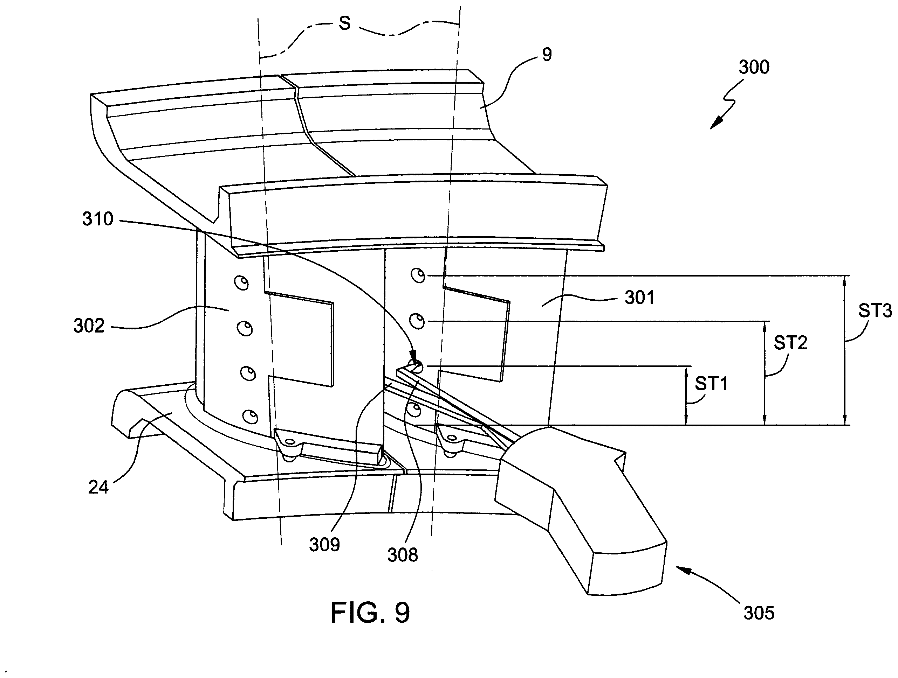

In figure 9 is shown an assembly 300 for measuring at least one geometrical parameter according to a second embodiment. The assembly 300 is used for measuring at least one geometrical parameter in a vane row 26 (which is only partially visible). Preferably, the vane row 26 is already mounted in the gas turbine assembly 1.

In the examples here disclosed and illustrated, the method and the assembly 300 for measuring at least one geometrical parameter according to the invention is applied on a stator vane row. However, the method and the assembly 300 for measuring at least one geometrical parameter can be applied, mutatis mutandis, to a rotor blade row above described.

In the following, the same reference numbers used in figures 1-8 are used for indicating identical or similar parts.

The assembly 300 comprises a first frame 301 coupled to a first vane 25, a second frame 302 coupled to a second vane 25 adjacent to the first vane 25 to which the first frame 301 is coupled, and a measuring device 305 coupled to the first frame 301 and to the second frame 302.

The measuring device 305 is configured to measure at least one throat distance T between the first vane 25 and the second vane 25 adjacent to the first vane 25.

In the non-limiting example here disclosed and illustrated, the assembly 300 is configured to measure a plurality of throat distances T1, T2, T3... between the first vane 25 and the second vane 25 adjacent to the first vane 25 at different span heights.

The throat distance T is the minimum distance between the suction side 35 of the first vane 25 and the pressure side 37 of the second vane 25 at a defined span height.

The detected values of the throat distances T1, T2, T3... between the first vane 25 and the second vane 25 adjacent to the first vane 25 at different span heights are used to calculate the throat area.

The measuring device 305 is an inner calliper provided with a first appendix 308 (not completely visible) and a second appendix 309 configured to be arranged in contact with the suction side 35 of the first vane 25 and the pressure side 37 of the second vane 25 facing each other.

The measuring device 305 measures the distance between the first appendix 308 and the second appendix 309.

The measuring device 305 cooperates with the first frame 301 and the second frame 302 in order to reliably detect the throat distances T1, T2, T3....

In particular, the first frame 301 comprises at least one first support 310 configured to block the first appendix 308 of the measuring device 305 on one first position of the suction side 35 of the first vane 25 and the second frame 302 comprises at least one second support 312 configured to block the second appendix 309 of the measuring device 305 on one second position of the pressure side 37 of the second vane 25.

The first support 310 and the second support 312 are arranged at the same span height.

Preferably, the first support 310 and the second support 312 are holes configured to house the respective first appendix 308 and second appendix 309.

In the non-limiting example here disclosed and illustrated, the first frame 301 comprises a plurality of first supports 310 configured to block the first appendix 308 of the measuring device 305 on respective positions of the suction side 35 of the first vane 25 and the second frame 302 comprises a plurality of second supports 312 configured to block the second appendix 309 of the measuring device 305 on respective positions of the pressure side 37 of the second vane 25.

The plurality of first supports 310 are aligned along the span-wise direction S and arranged at a distance from each other.

The plurality of second supports 312 are aligned along the span-wise direction S and arranged equidistant from each other too.

Preferably, the plurality of first supports 310 and the plurality of second supports 312 are arranged at the same span heights ST1, ST2, ST3....

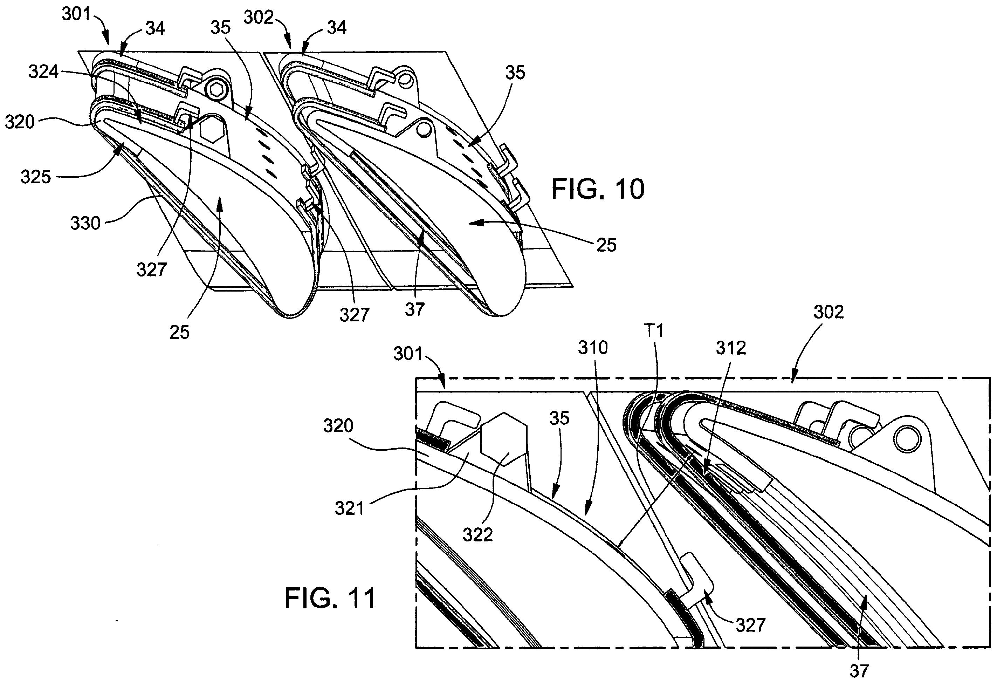

With reference to figure 10 and 11, the first frame 301 comprises a first trailing edge portion 320 arranged at the trailing edge 34 of the first vane 25.

The first trailing edge portion 320 is a jig having an inner shape complementary to the shape of the airfoil 31 of the first vane 25 along the trailing edge 34.

Preferably, the first trailing edge portion 320 has a span height slightly lower than the total span height of the airfoil 31.

Preferably, the first trailing edge portion 320 has bushes 321 protruding from the outer surface of the first trailing edge portion 320 configured to be engaged by respective support pins 322 configured to rest on the stator ring 24 and/or the stator casing 9 in order to permanently block the first trailing edge portion 320 with respect to the vane 25.

Preferably, the first trailing edge portion 320 has a suction side wall 324 extending along the suction side 35 and a pressure side wall 325 extending along the pressure side 34. The suction side wall 324 extends along more than 50% of the suction side 35 extension.

The pressure side wall 325 extend along less than 20% of the pressure side 37 extension.

The first trailing edge portion 320 is preferably provided with at least one couple of hooks 327 arranged on the suction side wall 324 and configured to cooperate with an elastic ring 330. The elastic ring 330, in use, is hooked to hooks 325 and arranged about the airfoil 31 to secure the first trailing edge portion 320 to the respective vane 25.

The first trailing edge portion 320 is provided with the plurality of first supports 310 on the suction side wall 324.

Preferably, the first trailing edge portion 320 is provided also with the plurality of second supports 312 on the pressure side wall 325.

As already stated, in the example here disclosed and illustrated, the first supports 310 and the second supports 312 are holes made in the respective suction side wall 324 and pressure side wall 325.

Preferably, the first frame 301 and the second frame 302 are substantially identical, therefore the features above described for the first frame 301 can be considered valid also for the second frame 302.

With reference to figures 9-11, in use, the method according to the present invention provides to:
- couple first frame 301 to the first vane 25 by arranging the first trailing edge portion 320 at the trailing edge of the first vane 25 and securing it by the elastic ring 330;
- couple the second frame 302 to the second vane 25 adjacent to the first vane 25 analogously to what done for the first frame 301;
- regulate the support pins 322 engaging respective bushes 321;
- couple the measuring device 305 to the first frame 301 and to the second frame 302 preferably in such a way that one appendix 308 engages the first support 310 of the first frame 301 and the other appendix 309 engages the second support 312 of the second frame 302;
- measure the first throat distance T1 by means of the measuring device 305;
- arranging the measuring device in an another position in such a way that one appendix 308 engages another first support 310 of the first frame 301 and the other appendix 309 engages another second support 312 of the second frame 302.
- measure another throat distance T2, T3.. by means of the measuring device 305.

Thanks to the above features the assemblies 30, 300 according to the present invention can be easily adopted by the operators for measuring geometrical parameters in a reliable and rapid way.

## Claims

1. Method for measuring at least one geometrical parameter in a blade row or in a vane row of a gas turbine assembly (1); the method comprising:
- coupling a first frame (40; 301) to one first blade or vane (25) of the blade or vane row;
- coupling a second frame (41; 302) to one second blade or vane (25) of the blade or vane row adjacent to the first blade or vane (25);
- coupling a measuring device (43; 305) to the first frame (40; 301) and to the second frame (41; 302);
- measuring the geometrical parameter with the measuring device (43; 305).

2. Method according to claim 1, wherein the step of measuring the geometrical parameter comprises measuring the stagger angle (α) of the first blade or vane (25).

3. Method according to claim 2, wherein the measuring device (43; 305) comprises a goniometer; the goniometer comprising two longitudinal arms (62, 63), at least one of which is movable, and being configured to measure the angle defined between the two arms (62, 63).

4. Method according to claim 3, wherein the first frame (40) comprises a first leading edge portion (45) arranged at the leading edge (32) of the first blade or vane (25) and a first trailing edge portion (46) arranged at the trailing edge (34) of the first blade or vane (25); the first leading edge portion (45) comprising a first leading edge support (49) and the first trailing edge portion (46) comprising a first trailing edge support (50); the first leading edge support (49) and the first trailing edge support (50) being arranged at a same first span height (S1, S2) of the first blade or vane (25).

5. Method according to claim 4, wherein the second frame (41) comprises a second leading edge portion (55) arranged at the leading edge (32) of the second blade or vane (25); the second leading edge portion (55) comprising a second leading edge support (57); the second leading edge support (57) being arranged at a second span height (S3) of the second blade or vane (25) such that the second leading edge support (57) of the second blade or vane (25) and first leading edge support (49) of the first blade or vane (25) belong to a plane substantially orthogonal to the span-wise direction (S) of the first blade or vane (25).

6. Method according to claim 5, wherein the step of coupling a measuring device (43) to the first frame (40) and to the second frame (41) comprises arranging the goniometer so as one arm (62) is coupled to the first leading edge support (49) and to the first trailing edge support (50) and the other arm (63) is coupled to the first leading edge support (49) and to the second leading edge support (57).

7. Method according to claim 6, wherein the first arm (62) is arranged in contact with a trailing edge (32) and a leading edge (34) of the first blade or vane (25) facing a pressure side (37) of the first blade or vane (25), and the second arm (63) is arranged in contact with a leading edge (32) of the first blade or vane (25) and with a leading edge (32) of the second blade or vane (25).

8. Method according to claim 1, wherein the step of measuring the geometrical parameter comprises measuring at least one throat distance (T1, T2, ..) between the first blade or vane (25) and the second blade or vane (25).

9. Method according to claim 8, wherein the step of measuring the geometrical parameter comprises measuring a plurality of throat distances (T1, T2, ..) between the first blade or vane (25) and the second blade or vane (25) at different span heights of the first blade or vane (25).

10. Method according to claim 8 or 9, wherein the throat distance (T1, T2, ..) is the minimum distance between the suction side (35) of the first blade or vane (25) and the pressure side (37) of the second blade or vane (25) at a defined span height.

11. Method according to claim 9 or 10, wherein the measuring device (305) is an inner calliper provided with a first appendix (308) and a second appendix (309) configured to be arranged respectively in contact with the suction side (35) of the first blade or vane (25) and the pressure side (37) of the second blade or vane (25) facing each other.

12. Method according to claim 11, wherein the first frame (301) comprises at least one first support (310) configured to block the first appendix (308) of the measuring device (305) on one first position of the suction side (35) of the first blade or vane (25) and the second frame (302) comprises at least one second support (312) configured to block the second appendix (309) of the measuring device (305) on one second position of the pressure side (37) of the second blade or vane (25); the first support (310) and the second support (312) being arranged at the same span heights (ST1, ST2, ST3..).

13. Method according to claim 12, wherein the first support (310) and the second support (312) are holes configured to house the respective first appendix (308) and second appendix (309).

14. Method according to anyone of the foregoing claims, wherein the blade row or the vane row is mounted in the gas turbine assembly (1).

15. Assembly for measuring at least one geometrical parameter in a blade row of a gas turbine assembly 1; the assembly for measuring comprising:
- a first frame (40; 301) configured to be coupled to one first blade or vane (25) of the blade or vane row;
- a second frame (41; 302) configured to be coupled to one second blade or vane (25) of the blade or vane row adjacent to the first blade or vane (25);
- a measuring device (43; 305) configured to measure the geometrical parameter and configured to be coupled to the first frame (40; 301) and the second frame (41; 302).

16. Assembly according to claim 15, wherein the measuring device (43) is configured to measure the stagger angle (α) of the first blade or vane (25).

17. Assembly according to claim 15, wherein the measuring device (305) is configured to measure at least one throat distance (T1, T2, T3..) between the first blade or vane (25) and the second blade or vane (25).

## Patentansprüche

1. Verfahren zur Messung wenigstens eines geometrischen Parameters in einer Schaufelreihe oder in einer Leitschaufelreihe einer Gasturbinenanordnung (1); wobei das Verfahren umfasst:
- Koppeln eines ersten Rahmens (40; 301) an eine erste Schaufel oder Leitschaufel (25) der Schaufel- oder Leitschaufelreihe;
- Koppeln eines zweiten Rahmens (41; 302) an eine zweite Schaufel oder Leitschaufel (25) der Schaufel- oder Leitschaufelreihe, die zur ersten Schaufel oder Leitschaufel (25) benachbart ist;
- Koppeln einer Messvorrichtung (43; 305) mit dem ersten Rahmen (40; 301) und mit dem zweiten Rahmen (41; 302);
- Messen des geometrischen Parameters mit der Messvorrichtung (43; 305).

2. Verfahren nach Anspruch 1, wobei der Schritt des Messens des geometrischen Parameters das Messen des Staffelungswinkels (α) der ersten Schaufel oder Leitschaufel (25) umfasst.

3. Verfahren nach Anspruch 2, wobei die Messvorrichtung (43; 305) ein Goniometer umfasst; wobei das Goniometer zwei longitudinale Arme (62, 63) umfasst, von denen wenigstens einer beweglich ist, und dazu konfiguriert ist, den zwischen den beiden Armen (62, 63) gebildeten Winkel zu messen.

4. Verfahren nach Anspruch 3, wobei der erste Rahmen (40) einen ersten Vorderkantenabschnitt (45), der an der Vorderkante (32) der ersten Schaufel oder Leitschaufel (25) angeordnet ist, und einen ersten Hinterkantenabschnitt (46), der an der Hinterkante (34) der ersten Schaufel oder Leitschaufel (25) angeordnet ist, umfasst, wobei der erste Vorderkantenabschnitt (45) eine erste Vorderkantenhalterung (49) umfasst und der erste Hinterkantenabschnitt (46) eine erste Hinterkantenhalterung (50) umfasst; wobei die erste Vorderkantenhalterung (49) und die erste Hinterkantenhalterung (50) auf einer gleichen ersten Spannweitenhöhe (S31, S2) der ersten Schaufel oder Leitschaufel (25) angeordnet sind.

5. Verfahren nach Anspruch 4, wobei der zweite Rahmen (41) einen zweiten Vorderkantenabschnitt (55) umfasst, der an der Vorderkante (32) der zweiten Schaufel oder Leitschaufel (25) angeordnet ist; wobei der zweite Vorderkantenabschnitt (55) eine zweite Vorderkantenhalterung (57) umfasst; wobei die zweite Vorderkantenhalterung (57) in einer zweiten Spannweitenhöhe (S3) der zweiten Schaufel oder Leitschaufel (25) angeordnet ist, so dass die zweite Vorderkantenhalterung (57) der zweiten Schaufel oder Leitschaufel (25) und die erste Vorderkantenhalterung (49) der ersten Schaufel oder Leitschaufel (25) zu einer Ebene gehören, die im Wesentlichen orthogonal zur Spannweitenrichtung (S) der ersten Schaufel oder Leitschaufel (25) ist.

6. Verfahren nach Anspruch 5, wobei der Schritt des Koppelns einer Messvorrichtung (43) mit dem ersten Rahmen (40) und dem zweiten Rahmen (41) das Anordnen des Goniometers umfasst, so dass ein Arm (62) mit der ersten Vorderkantenhalterung (49) und der ersten Hinterkantenhalterung (50) gekoppelt ist und der andere Arm (63) mit der ersten Vorderkantenhalterung (49) und der zweiten Vorderkantenhalterung (57) gekoppelt ist.

7. Verfahren nach Anspruch 6, wobei der erste Arm (62) in Kontakt mit einer Hinterkante (32) und einer Vorderkante (34) der ersten Schaufel oder Leitschaufel (25) angeordnet ist, die einer Druckseite (37) der ersten Schaufel oder Leitschaufel (25) zugewandt sind, und der zweite Arm (63) in Kontakt mit einer Vorderkante (32) der ersten Schaufel oder Leitschaufel (25) und mit einer Vorderkante (32) der zweiten Schaufel oder Leitschaufel (25) angeordnet ist.

8. Verfahren nach Anspruch 1, wobei der Schritt des Messens des geometrischen Parameters das Messen wenigstens einer Kehlweite (T1, T2, ...) zwischen der ersten Schaufel oder Leitschaufel (25) und der zweiten Schaufel oder Leitschaufel (25) umfasst.

9. Verfahren nach Anspruch 8, wobei der Schritt des Messens des geometrischen Parameters das Messen mehrerer Kehlweiten (T1, T2, ...) zwischen der ersten Schaufel oder Leitschaufel (25) und der zweiten Schaufel oder Leitschaufel (25) bei unterschiedlichen Spannweitenhöhen der ersten Schaufel oder Leitschaufel (25) umfasst.

10. Verfahren nach Anspruch 8 oder 9, wobei die Kehlweite (T1, T2, **...)** der Mindestabstand zwischen der Saugseite (35) der ersten Schaufel oder Leitschaufel (25) und der Druckseite (37) der zweiten Schaufel oder Leitschaufel (25) an einer definierten Spannweitenhöhe ist.

11. Verfahren nach Anspruch 9 oder 10, wobei die Messvorrichtung (305) ein Innenmessschieber ist, der mit einem ersten Fortsatz (308) und einem zweiten Fortsatz (309) versehen ist, die dazu konfiguriert sind, jeweils in Kontakt mit der Saugseite (35) der ersten Schaufel oder Leitschaufel (25) und der Druckseite (37) der zweiten Schaufel oder Leitschaufel (25) angeordnet zu werden, die einander gegenüberliegen.

12. Verfahren nach Anspruch 11, wobei der erste Rahmen (301) wenigstens eine erste Halterung (310) umfasst, die dazu konfiguriert ist, den ersten Fortsatz (308) der Messvorrichtung (305) an einer ersten Position der Saugseite (35) der ersten Schaufel oder Leitschaufel (25) zu halten, und der zweite Rahmen (302) wenigstens eine zweite Halterung (312) umfasst, die dazu konfiguriert ist, den zweiten Fortsatz (309) der Messvorrichtung (305) an einer zweiten Position der Druckseite (37) der zweiten Schaufel oder Leitschaufel (25) zu halten; wobei die erste Halterung (310) und die zweite Halterung (312) auf den gleichen Spannweitenhöhen (ST1, ST2, ST3..) angeordnet sind.

13. Verfahren nach Anspruch 12, wobei die erste Halterung (310) und die zweite Halterung (312) Löcher sind, die dazu konfiguriert sind, den jeweiligen ersten Fortsatz (308) und zweiten Fortsatz (309) aufzunehmen.

14. Verfahren nach einem der vorangehenden Ansprüche, wobei die Schaufel- oder Leitschaufelreihe in der Gasturbinenanordnung (1) montiert ist.

15. Anordnung zum Messen wenigstens eines geometrischen Parameters in einer Schaufelreihe einer Gasturbinenanordnung **1;** wobei die Anordnung zum Messen umfasst:
- einen ersten Rahmen (40; 301), der dazu konfiguriert ist, an eine erste Schaufel oder Leitschaufel (25) der Schaufel- oder Leitschaufelreihe gekoppelt zu werden;
- einen zweiten Rahmen (41; 302), der dazu konfiguriert ist, an eine zweite Schaufel oder Leitschaufel (25) der Schaufel- oder Leitschaufelreihe gekoppelt zu werden, die zur ersten Schaufel oder Leitschaufel (25) benachbart ist;
- eine Messvorrichtung (43; 305), die dazu konfiguriert ist, den geometrischen Parameter zu messen, und die dazu konfiguriert ist, mit dem ersten Rahmen (40; 301) und dem zweiten Rahmen (41; 302) gekoppelt zu werden.

16. Anordnung nach Anspruch 15, wobei die Messvorrichtung (43) dazu konfiguriert ist, den Staffelungswinkel (α) der ersten Schaufel oder Leitschaufel (25) zu messen.

17. Anordnung nach Anspruch 15, wobei die Messvorrichtung (305) dazu konfiguriert ist, wenigstens eine Kehlweite (T1, T2, T3...) zwischen der ersten Schaufel oder Leitschaufel (25) und der zweiten Schaufel oder Leitschaufel (25) zu messen.

## Revendications

1. Procédé pour mesurer au moins un paramètre géométrique dans une rangée d'aubes de rotor ou dans une rangée d'aubes de stator d'un ensemble de turbine à gaz (1) ; le procédé comprenant les faits de :
coupler un premier cadre (40 ; 301) à une première aube de rotor ou aube de stator (25) de la rangée d'aubes de rotor ou d'aubes de stator ;
coupler un deuxième cadre (41 ; 302) à une deuxième aube de rotor ou aube de stator (25) de la rangée d'aubes de rotor ou d'aubes de stator adjacente à la première aube de rotor ou aube de stator (25) ;
coupler un dispositif de mesure (43 ; 305) au premier cadre (40 ; 301) et au deuxième cadre (41 ; 302) ;
mesurer le paramètre géométrique avec le dispositif de mesure (43 ; 305).

2. Procédé selon la revendication 1, dans lequel l'étape pour mesurer le paramètre géométrique comprend le fait de mesurer l'angle de décalage (α) de la première aube de rotor ou aube de stator (25).

3. Procédé selon la revendication 2, dans lequel le dispositif de mesure (43 ; 305) comprend un goniomètre ; le goniomètre comprenant deux bras longitudinaux (62, 63), dont au moins l'un est mobile, et étant configuré pour mesurer l'angle défini entre les deux bras (62, 63).

4. Procédé selon la revendication 3, dans lequel le premier cadre (40) comprend une première partie de bord d'attaque (45) agencée au niveau du bord d'attaque (32) de la première aube de rotor ou aube de stator (25) et une première partie de bord de fuite (46) agencée au niveau du bord de fuite (34) de la première aube de rotor ou aube de stator (25) ; la première partie de bord d'attaque (45) comprenant un premier support de bord d'attaque (49) et la première partie de bord de fuite (46) comprenant un premier support de bord de fuite (50) ; le premier support de bord d'attaque (49) et le premier support de bord de fuite (50) étant agencés à une même première hauteur de portée (S1, S2) de la première aube de rotor ou aube de stator (25).

5. Procédé selon la revendication 4, dans lequel le deuxième cadre (41) comprend une deuxième partie de bord d'attaque (55) agencée au niveau du bord d'attaque (32) de la deuxième aube de rotor ou aube de stator (25) ; la deuxième partie de bord d'attaque (55) comprenant un deuxième support de bord d'attaque (57) ; le deuxième support de bord d'attaque (57) étant agencé à une deuxième hauteur de portée (S3) de la deuxième aube de rotor ou aube de stator (25) de sorte que le deuxième support de bord d'attaque (57) de la deuxième aube de rotor ou aube de stator (25) et le premier support de bord d'attaque (49) de la première aube de rotor ou aube de stator (25) appartiennent à un plan sensiblement orthogonal à la direction dans le sens de l'envergure (S) de la première aube de rotor ou aube de stator (25).

6. Procédé selon la revendication 5, dans lequel l'étape pour coupler un dispositif de mesure (43) au premier cadre (40) et au deuxième cadre (41) comprend le fait d'agencer le goniomètre de sorte qu'un bras (62) est couplé au premier support de bord d'attaque (49) et au premier support de bord de fuite (50) et l'autre bras (63) est couplé au premier support de bord d'attaque (49) et au deuxième support de bord d'attaque (57).

7. Procédé selon la revendication 6, dans lequel le premier bras (62) est agencé en contact avec un bord de fuite (32) et un bord d'attaque (34) de la première aube de rotor ou aube de stator (25) faisant face à un côté de pression (37) de la première aube de rotor ou aube de stator (25), et le deuxième bras (63) est agencé en contact avec un bord d'attaque (32) de la première aube de rotor ou aube de stator (25) et avec un bord d'attaque (32) de la deuxième aube de rotor ou aube de stator (25).

8. Procédé selon la revendication 1, dans lequel l'étape pour mesurer le paramètre géométrique comprend le fait de mesurer au moins une distance de col (T1, T2, ...) entre la première aube de rotor ou aube de stator (25) et la deuxième aube de rotor ou aube de stator (25).

9. Procédé selon la revendication 8, dans lequel l'étape pour mesurer le paramètre géométrique comprend le fait de mesurer une pluralité de distances de col (T1, T2, ...) entre la première aube de rotor ou aube de stator (25) et la deuxième aube de rotor ou aube de stator (25) à différentes hauteurs de portée de la première aube de rotor ou aube de stator (25).

10. Procédé selon la revendication 8 ou 9, dans lequel la distance de col (T1, T2, ...) est la distance minimum entre le côté d'aspiration (35) de la première aube de rotor ou aube de stator (25) et le côté de pression (37) de la deuxième aube de rotor ou aube de stator (25) à une hauteur de portée définie.

11. Procédé selon la revendication 9 ou 10, dans lequel le dispositif de mesure (305) est un compas interne prévu avec un premier appendice (308) et un deuxième appendice (309) configurés pour être respectivement agencés en contact avec le côté d'aspiration (35) de la première aube de rotor ou aube de stator (25) et le côté de pression (37) de la deuxième aube de rotor ou aube de stator (25) qui se font face.

12. Procédé selon la revendication 11, dans lequel le premier cadre (301) comprend au moins un premier support (310) configuré pour bloquer le premier appendice (308) du dispositif de mesure (305) sur une première position du côté d'aspiration (35) de la première aube de rotor ou aube de stator (25) et le deuxième cadre (302) comprend au moins un deuxième support (312) configuré pour bloquer le deuxième appendice (309) du dispositif de mesure (305) sur une deuxième position du côté de pression (37) de la deuxième aube de rotor ou aube de stator (25) ; le premier support (310) et le deuxième support (312) étant agencés aux mêmes hauteurs de portée (ST1, ST2, ST3 ...).

13. Procédé selon la revendication 12, dans lequel le premier support (310) et le deuxième support (312) sont des trous configurés pour loger le premier appendice (308) et le deuxième appendice (309) respectifs.

14. Procédé selon l'une quelconque des revendications précédentes, dans lequel la rangée d'aubes de rotor ou la rangée d'aubes de stator est montée dans l'ensemble de turbine à gaz (1).

15. Ensemble pour mesurer au moins un paramètre géométrique dans une rangée d'aubes de rotor d'un ensemble de turbine à gaz 1 ; l'ensemble de mesure comprenant :
- un premier cadre (40 ; 301) configuré pour être couplé à une première aube de rotor ou aube de stator (25) de la rangée d'aubes de rotor ou d'aubes de stator ;
- un deuxième cadre (41 ; 302) configuré pour être couplé à une deuxième aube de rotor ou aube de stator (25) de la rangée d'aubes de rotor ou d'aubes de stator adjacente à la première aube de rotor ou aube de stator (25) ;
- un dispositif de mesure (43 ; 305) configuré pour mesurer le paramètre géométrique et configuré pour être couplé au premier cadre (40 ; 301) et au deuxième cadre (41 ; 302).

16. Ensemble selon la revendication 15, dans lequel le dispositif de mesure (43) est configuré pour mesurer l'angle de décalage (α) de la première aube de rotor ou aube de stator (25).

17. Ensemble selon la revendication 15, dans lequel le dispositif de mesure (305) est configuré pour mesurer au moins une distance de col (T1, T2, T3, ...) entre la première aube de rotor ou aube de stator (25) et la deuxième aube de rotor ou aube de stator (25).
